# EUROPÄISCHE PATENTSCHRIFT

(11) **EP 0 979 751 B1**
(45) Veröffentlichungstag und Bekanntmachung des Hinweises auf die Patenterteilung: **09.11.2005**
(21) Anmeldenummer: 99111912.4
(22) Anmeldetag: 21.06.1999
(51) Int. Cl.: B60N 2/28, B60N 2/16, B60N 2/07

(54) **Sitzträgergestell eines Fahrzeugsitzes mit einem linken und einem rechten vorderen Stellarm**
Vehicle seat support frame with left and right forward adjustment arms
Monture de support de siège de véhicule avec un support pivotable gauche et droit

(30) Priorität: 12.08.1998 DE 29814223 U
(43) Veröffentlichungstag der Anmeldung: 16.02.2000
(73) Patentinhaber: C. Rob. Hammerstein GmbH & Co.KG, 42699 Solingen (DE)
(72) Erfinder: Frohnhaus, Ernst-Reiner, 42653 Solingen (DE); Becker, Burckhard, 42655 Solingen (DE); Beneker, Wilfried, Dr., 42799 Leichlingen (DE)
(74) Vertreter: Bauer, Wulf

(56) Entgegenhaltungen:
- WO-A-97/36766
- FR-A- 2 495 911
- FR-A- 2 687 353
- GB-A- 1 338 899
- US-A- 5 310 154

## Beschreibung

Die Erfindung bezieht sich auf ein Sitzträgergestell eines Fahrzeugsitzes mit einem linken und einem rechten Seitenteil und einer linken und einer rechten, vorderen Schwenkstützelarm, wobei die linke Schwenkstütze im Vorderbereich des linken Seitenteils angelenkt ist, die rechte Schwenkstütze im Vorderbereich des rechten Seitenteils angelenkt ist und eine Verstelleinrichtung vorgesehen ist, mit der die Neigung der beiden Schwenkstützen eingestellt werden kann, wobei eine Schwenkstütze an der Außenseite des ihr zugehörigen Seitenteils angeordnet ist, siehe z. B. FR-A-2687353.

Bei Kraftfahrzeugsitzen besteht häufig eine Zuordnung, dass sich das linke Schienenpaar der Längsführung des Kraftfahrzeugsitzes im wesentlichen lotrecht unterhalb des linken Seitenteils des Sitzträgers befindet, ebenso dass sich das rechte Schienenpaar der Längsführung im wesentlichen lotrecht unterhalb des rechten Seitenteils des Sitzträgergestells befindet. Zumindest ist die Anordnung in vielen Fällen symmetrisch, wenn also ein Versatz vorhanden ist, ist er auf beiden Sitzseiten spiegelsymmetrisch.

Nun ist man bestrebt, die Schienenpaare möglichst in Nähe der seitlichen, versteiften Bereiche der Bodengruppe anzuordnen, also das fahrzeugaußenseitige Schienenpaar in Nähe des dortigen Schwellers oder direkt am Schweller und das fahrzeuginnenseitige Schienenpaar in Nähe des dortigen Tunnels oder direkt am Tunnel zu befestigen. Dies führt dazu, dass die bisher gewohnte, symmetrische Anordnung zwischen Längsführung und Sitzträgergestell nicht immer beibehalten werden kann, insbesondere dass ein nureinseitiger seitlicher Versatz auftritt. Die Erfindung beschäftigt sich mit einem Sitzgestell für diesen Fall.

Der Erfindung liegt die Aufgabe zugrunde, ein Sitzgestell anzugeben, das für eine stark seitlich versetzte Anordnung eines Sitzträgers gegenüber einer Längsführung geeignet ist und die aufgrund des einseitigen Versatzes auftretenden mechanischen Belastungen in möglichst einfacher Art abfängt.

Diese Aufgabe wird ausgehend von dem Sitzträgergestell der eingangs genannten Art dadurch gelöst, dass die eine Schwenkstütze a) ausgehend von der Gelenkverbindung mit diesem Seitenteil nach unten hin nach außen ausgestellt ist, b) eine quer zu ihrer Bewegungsebene verlaufende Aussteifung aufweist und c) mit der anderen Schwenkstütze über ein Querrohr starr verbunden ist.

Erfindungsgemäß ist also die eine vordere Schwenkstütze stark ausgestellt, während es die andere Schwenkstütze (der anderen Sitzseite) nicht ist. Die stark ausgestellte, also schräg nach unten und nach außen verlaufende Schwenkstütze hat eine Aussteifung und ist außenseitig am zugehörigen Seitenteil angeordnet. Diese Schwenkstütze nimmt im wesentlichen den großen Versatz auf, der an der entsprechenden Sitzseite zum zugehörigen Schienenpaar vorgesehen ist. Der Versatz an der anderen Sitzseite ist dagegen deutlich kleiner, beispielsweise drei- bis fünfmal kleiner.

Durch die Aussteifung wird erreicht, dass die entsprechende vordere Schwenkstütze auch quer zu ihrer Bewegungsebene eine ausreichende Festigkeit aufweist. Dementsprechend verläuft die Aussteifung quer zu ihrer Bewegungsebene. Die Bewegungsebene der Schwenkstütze ist die Ebene, in der sie sich bewegt, wenn sie um ihren Anlenkpunkt an der zugehörigen Schwenkstütze geschwenkt wird.

Aufgrund der Anordnung der nach außen ausgestellten Schwenkstütze an der Außenseite des zugehörigen Seitenteils wird schon ein gewisser Anteil des Versatzes realisiert. Da die andere Sitzseite keinen oder einen deutlichen geringeren Versatz aufweisen soll, ist ihre Schwenkstütze vorzugsweise an der Innenfläche des zugehörigen Seitenteils angelenkt.

Durch das Querrohr werden die beiden Schwenkstützen starr miteinander verbunden zu einer im wesentlichen H-förmigen Einheit. Dadurch werden die Verstellkräfte gleichzeitig auf beide Schwenkstützen geleitet. Durch das Querrohr wird zusätzlich eine Aussteifung erzielt, weil seitliche, an der ausgestellten Schwenkstütze angreifende Kräfte über das Querrohr auch auf die andere Schwenkstütze übertragen werden. Bevorzugt ist es dabei so, dass die Verbindung des Querrohrs mit den Schwenkstützen im wesentlichen in der Längsmitte der Schwenkstützen erfolgt.

Als besonders bevorzugt hat es sich herausgestellt, dass es die fahrzeugaussenseitige vordere Schwenkstütze ist, die die Aussteifung aufweist. Auf diese Weise kann das fahrzeugaußenseitige Schienenpaar relativ weit seitlich nach außen versetzt werden, also ein großer Versatz zwischen einer Vertikalen durch die zugehörige Schwenkstütze und dem fahrzeugseitigen Schienenpaar auftreten.

Die mechanische Wirkung der Aussteifung wird dadurch erhöht, dass sie mit dem Querrohr verbunden ist. Dadurch wird auch das Querrohr herangezogen, die Seitensteifigkeit der stärker ausgestellten Schwenkstütze zu erhöhen.

Vorzugsweise ist die fahrzeugaußenseitige, mit der Aussteifung versehene Schwenkstütze mindestens dreimal, insbesondere mindestens fünfmal stärker nach außen ausgestellt als die andere, fahrzeuginnenseitige oder fahrzeugaußenseitige Schwenkstütze. Der Sitz ist dadurch relativ unsymmetrisch zur Längsführung angeordnet. Vorzugsweise ist die andere Schwenkstütze ein im wesentlichen ebenes Teil.

Als bevorzugt hat es sich herausgestellt, wenn das Querrohr in einem Winkel von 10 bis 30 Grad zur Hauptrichtung der stärker ausgestellten, also bevorzugt der fahrzeugaußenseitigen Schwenkstütze verläuft.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigen:
- FIG. 1:: eine perspektivische Darstellung eines Sitzträgers für ein Sitzgestell in Form eines Montagebildes und
- FIG. 2:: eine Darstellung des Sitzträgers ähnlich Fig. 1, jedoch nicht als Montagebild, sondern in zusammengesetzter Form und mit zugeordneten Schienenpaaren einer Längsführung.

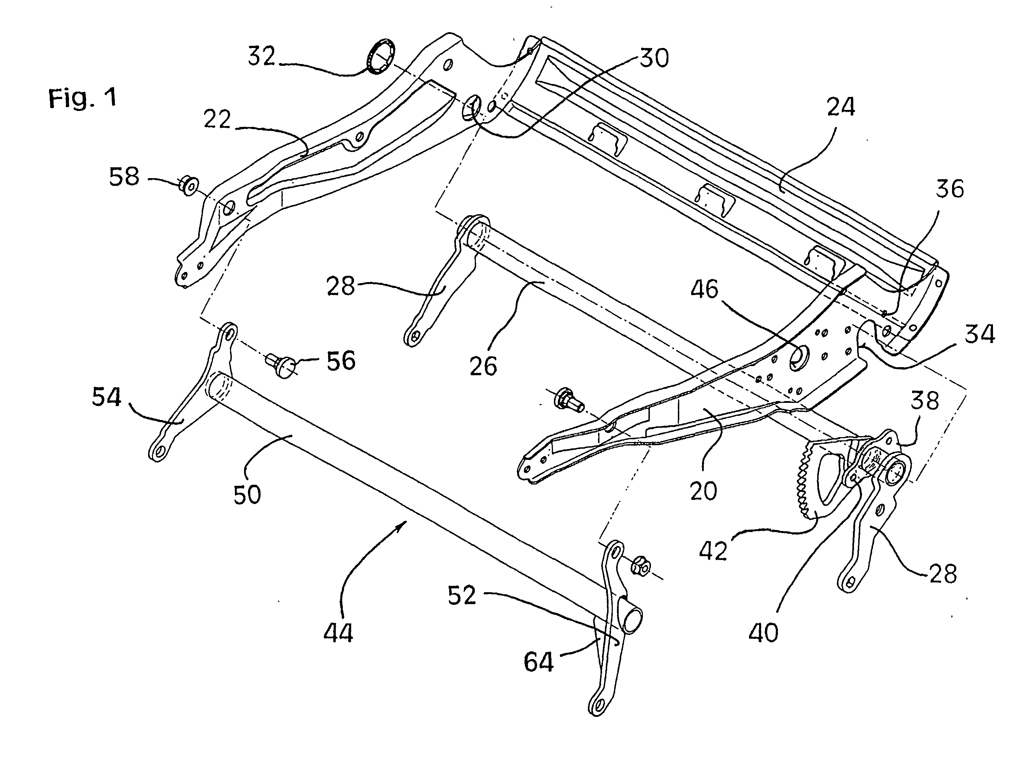

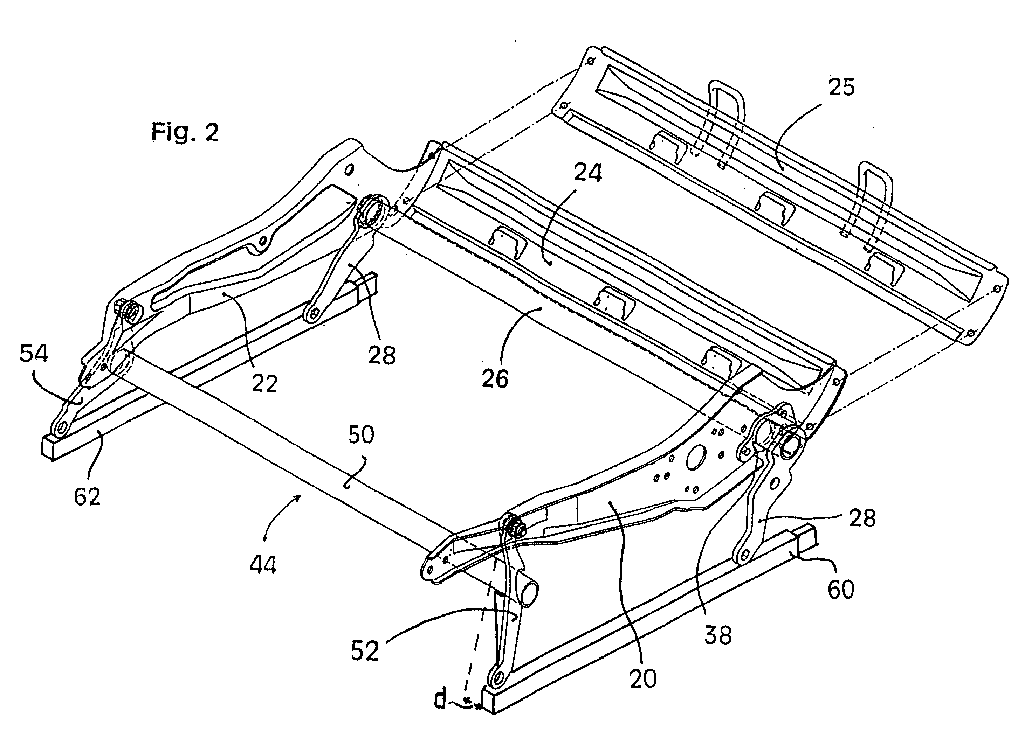

Wie aus Figur 1 und 2 ersichtlich ist, hat der Sitzträger ein linkes Seitenteil 20, ein rechtes Seitenteil 22 und eine rückwärtige Traverse 24. Die Bezeichnungen links und rechts sowie vom und hinten werden immer im Bezug auf einen Passagier gesehen, der auf dem Sitzträger Platz nimmt.

Weiterhin gehört zum Sitzträger eine rückwärtige Querwelle 26, an der ein linker und ein rechter Stellarm 28 festgelegt sind, beispielsweise angeschweißt sind. Wie aus Figur 1 ersichtlich, steht jenseits des rechten Stellarms 28 die Querwelle 26 frei vor, so dass dieser freie Endbereich in eine Lagerbohrung 30 des rechten Seitenteils 22 eingesetzt werden kann. Mittels des eingezeichneten Sicherungsringes 32 erfolgt die Fixierung.

Das linke Seitenteil 20 hat eine Aufnahmebucht 34, die nach unten offen ist. Es sind links und rechts der Aufnahmebucht 34 jeweils Löcher vorgesehen, die als erste Befestigungsmittel 36 bezeichnet werden. Um die Querwelle 26 ist ein Lagerteil 38 angeordnet, das einerseits eine Lagerung der Querwelle 26 übernimmt und andererseits zweite Befestigungsmittel 40 ausbildet, die auch hier als Löcher ausgeführt sind. Das Lagerteil 38 ist so ausgeführt, dass es die Aufnahmebucht 34 überbrückt und nach Befestigung am zugehörigen, linken Seitenteil 20 die (eigentlich dort fehlende) Lagerbohrung für den linken Bereich der Querwelle 26 ausbildet. Im gezeigten Ausführungsbeispiel befindet sich das Lagerteil 38 nach der Montage auf der Innenseite des linken Seitenteils 20, also zwischen den beiden Seitenteilen 20, 22. Der linke Stellarm 28 befindet sich dagegen auf der Außenseite des linken Seitenteils 20.

Weiter einwärts auf der Querwelle 26, also vom Lagerteil 38 zum rechten Seitenteil 22 hingewandt ist ein Antriebsteil 42 mit der Querwelle 26 verbunden. Es ist in der konkreten Ausbildung mit einem Zahnbogen versehen.

Aus der Beschreibung wird verständlich, dass die Querwelle 26 mit ihren beiden Stellarmen 28, dem Lagerteil 38 und dem Antriebsteil 42 als Baueinheit komplett vorgefertigt werden kann, die später, wie aus Figur 1 durch die strichpunktierte obere Montagelinie ersichtlich ist, in die vorgefertigte Einheit aus den beiden Seitenteilen 20, 22 und der rückwärtigen Traverse 24 eingefügt werden kann.

Wie Figur 1 und 2 zeigen, ist die rückwärtige Traverse 24 an insgesamt vier Verbindungspunkten mit den beiden Seitenteilen 20, 22 verbunden. Diese Verbindungspunkte sind lösbar, beispielsweise erfolgen sie über Schraubenverbindungen. Sie können auch durch entfernbare Niete realisiert sein. Ebenso kann die Verbindung des Lagerteils 38 mit dem Randbereich der Aufnahmebucht 34 mittels der Befestigungsmittel 36, 40 über Schweißen, Vernieten, Schrauben oder dergleichen erfolgen.

Wie Figur 2 zeigt, können zwei unterschiedliche Traversen 24, 25 eingesetzt werden. Die montiert dargestellte Traverse 24 ist eine normale Traverse. Sie hat in bekannter Weise Halterungen für die Aufnahme von Sitzfedern, die nach vorn verlaufen. Sie sind hier nicht dargestellt. Durch Lösen der vier Verbindungspunkte, die entsprechend ausgeführt sind, kann die Traverse 24 ersetzt werden durch eine Traverse 25 mit Bügeln für eine Isofix-Befestigung. Dies ist durch die vier zueinander parallelen, strichpunktierten Montagelinien dargestellt. Die Traverse 25 unterscheidet sich mit Ausnahme der zwei Isofix-Bügel nicht von der Traverse 24.

In Figur 1 und 2 ist noch eine vordere Schwenkbrücke 44 eingezeichnet. Sie besteht aus einem Querrohr 50 und zwei Schwenkstützen 52, 54, die jeweils an ihrem oberen Ende und an ihrem unteren Ende eine Lagerbohrung haben und etwa in ihrem Mittelbereich durch das Querrohr 50 fest miteinander verbunden sind. Auch diese Einheit kann vormontiert und nachträglich in die beschriebene Anordnung integriert werden, wie dies ebenfalls anhand der zwei unteren strichpunktierten Montagelinien deutlich wird. An den Endpunkten der beiden Montagelinien befinden sich jeweils Verbindungsmittel, die hier als Schrauben 56 und Muttern 58 ausgeführt sind.

Wie die Figuren zeigen, ist die rechte Schwenkstütze 54 ein im wesentlichen ebenes Blechstanzteil. Sie ist, wie aus Figur 2 ersichtlich ist, auf der Außenseite des rechten Seitenteils 22 angeordnet. Im wesentlichen lotrecht unter ihr befindet sich ein rechtes Schienenpaar 62 einer Längsführung. Dagegen ist die linke Schwenkstütze 52 stark nach außen und nach unten ausgestellt, verläuft also schräg. Dies hat zur Folge, dass ein zugehöriges, linkes Schienenpaar 60 sich in einer Entfernung d von einer Vertikalen durch den Verbindungsbereich zwischen linker Schwenkstütze 52 und linkem Seitenteil 20 befindet, der auch als Versatz bezeichnet wird. Dieser Versatz d ist, wie ein Vergleich mit der rechten Sitzseite zeigt, mindestens dreimal, vorzugsweise mindestens fünfmal so groß wie auf der rechten Sitzseite.

Die linke Schwenkstütze 52 verläuft in ihrem Verbindungsbereich mit dem Querrohr 50 schräg, man erkennt dies an der elliptisch verlaufenden Verbindungslinie. Dagegen verläuft das Querrohr 50 praktisch rechtwinklig zur rechten Schwenkstütze 54, man erkennt dies an der kreisförmigen Verbindungslinie.

Die linke Schwenkstütze 52 hat eine Aussteifung 64 in Form eines im wesentlichen dreieckförmigen Blechstücks, das bevorzugt einstückig mit der eigentlichen Schwenkstütze 52 zusammenhängt und aus ihrer Ebene herausgebogen ist, so dass es im wesentlichen quer zur Bewegungsebene, in der die linke Schwenkstütze 52 um ihren Anlenkpunkt am linken Seitenteil schwenkt, steht. Die Aussteifung 64 läuft nach unten aus, sie ist oben, entlang einer Dreiecksseite, mit dem Querrohr 50 verbunden. Es ist auch möglich, oberhalb des Querrohres eine entsprechende Aussteifung einzusetzen, die aber hier nicht eingezeichnet ist.

Im vorderen Endbereich der beiden Seitenteile 20, 22 sind jeweils zwei Löcher vorgesehen, hier kann eine vordere Traverse (nicht dargestellt) angeordnet werden.

Wie sich aus Figur 1 und 2 ergibt, sind die beiden Seitenteile 20, 22 im wesentlichen spiegelbildlich baugleich, sie unterscheiden sich jedoch im Bereich der Lagerbohrung 30 bzw. der Aufnahmebucht 34. In Nähe der Aufnahmebucht 34 ist ein Loch im Seitenteil 20 vorgesehen, das hier als Lager 46 ausgebildet ist. Um dieses Lager 46 sind mehrere Befestigungslöcher vorgesehen. Im Bereich um das Lager 46 kann ein Elektromotor angeflanscht werden. Er hat folgende Besonderheit: Sein Getriebegehäuse ist in dem, dem Seitenteil 20 zugewandten Bereich offen, dort fehlt also eine Gehäusewand des Getriebegehäuses. Das Seitenteil 20 übernimmt im Bereich um das Lager 46 herum die Funktion der fehlenden Gehäusewand des Getriebegehäuses. Auf diese Weise wird Gewicht gespart, es wird eine präzise Lagerung der Ausgangswelle des Elektromotors im Seitenteil 20 erreicht und die Zuordnung zum Antriebsteil 42 ist günstig.

Es ist auch möglich, anstelle eines Lagers direkt im linken Seitenteil 20 ein entsprechend vergrößertes Lagerteil 38 einzusetzen, das zugleich auch noch die Lagerung der Ausgangswelle des Elektromotors und den Abschluß des Getriebegehäuses übernimmt.

## Patentansprüche

1. Sitzträgergestell eines Fahrzeugsitzes mit einem linken und einem rechten Seitenteil (20,22) und einer linken und einer rechten, vorderen Schwenkstütze (52,54), wobei die linke Schwenkstütze (52) im Vorderbereich des linken Seitenteils (20) angelenkt ist, die rechte Schwenkstütze (54) im Vorderbereich des rechten Seitenteils (22) angelenkt ist und eine Verstelleinrichtung vorgesehen ist, mit der die Neigung der beiden Schwenkstützen (52,54) eingestellt werden kann, wobei eine Schwenkstütze (52) an der Außenseite des ihr zugehörigen Seitenteils (20) angeordnet ist, **dadurch gekennzeichnet, dass** die eine Schwenkstütze (52) a) ausgehend von der Gelenkverbindung mit diesem Seitenteil (20) nach unten hin nach außen ausgestellt ist, b) eine quer zu ihrer Bewegungsebene verlaufende Aussteifung (64) aufweist und c) mit der anderen Schwenkstütze (54) über ein Querrohr (50) starr verbunden ist.

2. Sitzträgergestell nach Anspruch 1, **dadurch gekennzeichnet, dass** es die fahrzeugaußenseitige vordere Schwenkstütze (52) ist, die die Aussteifung (64) aufweist.

3. Sitzträgergestell nach Anspruch 1, **dadurch gekennzeichnet, dass** die Schwenkstützen (52,54) an ihren unteren, freien Enden eine Aufnahme für die Lagerung in einer jeweils zugeordneten Sitzschiene einer Längsführung aufweisen, insbesondere dass die Aufnahme als Bohrung ausgebildet ist.

4. Sitzträgergestell nach Anspruch 1, **dadurch gekennzeichnet, dass** die Aussteifung (64) der außenseitig angeordneten Schwenkstütze (52) mit dem Querrohr (50) verbunden ist.

5. Sitzträgergestell nach Anspruch 1, **dadurch gekennzeichnet, dass** die Aussteifung (64) der außenseitigen Schwenkstütze (52) im wesentlichen dreieckförmig ausgeführt ist.

6. Sitzträgergestell nach Anspruch 1, **dadurch gekennzeichnet, dass** die andere Schwenkstütze (54) ein im wesentlichen ebenes Teil ist, jedenfalls deutlich weniger ausgestellt ist als die mit der Aussteifung (64) versehene Schwenkstütze (52).

7. Sitzträgergestell nach Anspruch 1, **dadurch gekennzeichnet, dass** die mit der Aussteifung (64) versehene Schwenkstütze (52) das Querrohr (50) mit einem Winkel zwischen 10 und 30 Grad schneidet.

8. Sitzträgergestell nach Anspruch 1, **dadurch gekennzeichnet, dass** die mit der Aussteifung (64) versehene, fahrzeugaußenseitige Schwenkstütze (52) mindestens dreimal, insbesondere mindestens fünfmal stärker nach außen ausgestellt ist als die andere Schwenkstütze (54).

## Claims

1. Frame for a seat carrier of a vehicle seat of a vehicle comprising a left and a right side part (20, 22), a left and a right frontal swivelling prop (52, 54), the left swivelling prop (52) being hinged in a front area of the left side part (20) and the right swivelling prop (54) being hinged in a front area of the right side part (22), an adjusting device being provided by means of which an incline of the two swivelling props (52, 54) may be adjusted, one swivelling prop being arranged on an outer side of the corresponding side part, **characterized in that** the swivelling prop (52) a) starting from the hinge joint with said side part (20) is hooked outwards downwards, b) has a stiffening (64) extending obliquely to its plane of motion and c) is rigidly interconnected by a cross tube (50) with the other swivelling prop (54).

2. Frame for a seat carrier according to claim 1, **characterized in that** it is the frontal swivelling prop (52) which faces a door of the vehicle which embodies the stiffening (64).

3. Frame for a seat carrier according to claim 1, **characterized in that** the swivelling props (52, 54) have at their lower ends a receiving means for bearing in an associated seat rail of a longitudinal guide in each case, especially that the receiving means is embodied as a bore.

4. Frame for a scat carrier according to claim 1, **characterized in that** the stiffening (64) of the swivelling prop (52) which faces a door of the vehicle is connected to the cross tube (50).

5. Frame for a seat carrier according to claim 1, **characterized in that** the stiffening (64) of the swivelling prop (52) which faces a door of the vehicle is essentially of a triangular shape.

6. Frame for a seat carrier according to claim 1, **characterized in that** the other swivelling prop (54) is a generally plane part, in any case is by far less hooked outwards than the swivelling prop (52) having the stiffening (64).

7. Frame for a seat carrier according to claim 1, **characterized in that** the swivelling prop (52) provided with the stiffening (64) is crossing the cross tube (50) at an angle of between 10 and 30 degrees.

8. Frame for a seat carrier according to claim 1, **characterized in that** the swivelling prop (52) provided with the stiffening (64) is hooked out at least three times, especially at least five times more towards the outer side than the other swivelling prop (54).

## Revendications

1. Bâti de support de siège d'un siège de véhicule comprenant des parties latérales gauche et droite (20, 22) ainsi que des appuis pivotants avant gauche et droit (52, 54), ledit appui pivotant gauche (52) étant articulé dans la zone avant de la partie latérale gauche (20), l'appui pivotant droit (54) étant articulé dans la zone avant de la partie latérale droite (22) et un dispositif de réglage étant prévu au moyen duquel on peut régler l'inclinaison des deux appuis pivotants (52, 54), un appui pivotant (52) étant disposé sur la face externe de la partie latérale (20) associé à celui-ci, **caractérisé par le fait que** l'un (52) des appuis pivotants a) s'étend, à partir du joint articulé avec cette partie latérale (20), en biais vers le bas et vers l'extérieur, b) présente un élément de raidissement (64) s'étendant transversalement à son plan de déplacement et c) est relié rigidement via un tube transversal (50) à l'autre appui pivotant (54).

2. Bâti de support de siège selon la revendication 1, **caractérisé par le fait que** c'est l'appui pivotant avant (52) situé du côté d'une portière du véhicule, qui présente ledit élément de raidissement (64).

3. Bâti de support de siège selon la revendication 1, **caractérisé par le fait que** les appuis pivotants (52, 54) présentent, à leurs extrémités inférieures libres, un moyen de réception pour être logés dans un rail de siège respectivement associé d'un guide longitudinal, en particulier que ledit moyen de réception est réalisé comme perçage.

4. Bâti de support de siège selon la revendication 1, **caractérisé par le fait que** l'élément de raidissement (64) de l'appui pivotant (52) disposé du côté d'une portière du véhicule est relié au tube transversal (50).

5. Bâti de support de siège selon la revendication 1, **caractérisé par le fait que** ledit élément de raidissement (64) de l'appui pivotant (52) situé du côté d'une portière du véhicule présente une forme pour l'essentiel triangulaire.

6. Bâti de support de siège selon la revendication 1, **caractérisé par le fait que** l'autre appui pivotant (54) est une pièce pour l'essentiel plane, que, en tout cas, il s'étend sensiblement moins obliquement vers l'extérieur que l'appui pivotant (52) pourvu dudit élément de raidissement (64).

7. Bâti de support de siège selon la revendication 1, **caractérisé par le fait que** l'appui pivotant (52) pourvu de l'élément de raidissement (64) coupe le tube transversal (50) à un angle compris entre 10 et 30 degrés.

8. Bâti de support de siège selon la revendication 1, **caractérisé par le fait que** l'appui pivotant (52) situé du côté d'une portière du véhicule et pourvu de l'élément de raidissement (64) s'étend au moins trois fois, en particulier au moins cinq fois plus fortement en biais vers l'extérieur que l'autre appui pivotant (54).
